# FASCICULE DE BREVET EUROPEEN

(11) **EP 0 678 133 B1**
(45) Date de publication et mention de la délivrance du brevet: **09.04.1997**
(21) Numéro de dépôt: 94904205.5
(22) Date de dépôt: 06.01.1994
(51) Int. Cl.: E01F 11/00, E01C 11/00

(54) **PROCEDE DE CONSTRUCTION D'UN SOL INCORPORANT UN FIL, COMME UN FIL DE GUIDAGE, ET ACCESSOIRE POUR LA MISE EN PLACE PRECISE DU FIL SOUS LE NIVEAU DU SOL**
VERFAHREN ZUM HERSTELLEN EINES BODENS MIT EINEM DRAHT ALS FUEHRUNGSDRAHT UND HILFSMITTEL ZUM GENAUEN POSITIONIEREN VON DIESEM DRAHT UNTER DEM BODENNIVEAU
METHOD FOR BUILDING A FLOOR WITH A BUILT-IN WIRE SUCH AS A GUIDE WIRE, AND ACCESSORY FOR ACCURATELY POSITIONING THE WIRE BENEATH THE FLOOR

(30) Priorité: 12.01.1993 FR 9300420
(43) Date de publication de la demande: 25.10.1995
(73) Titulaire: LAFARGE MATERIAUX DE SPECIALITES, 92120 Montrouge (FR)
(72) Inventeur: GUERINET, Jean-Paul, F-60200 Compiègne (FR); NOUAILHETAS, Hervé, F-94200 Charenton-le-Pont (FR)
(74) Mandataire: Tilloy, Anne-Marie
(86) Numéro de dépôt international: FR9400016
(87) Numéro de publication internationale: WO9416151

(56) Documents cités:
- FR-A- 1 285 458
- FR-A- 2 468 694
- FR-A- 2 629 845
- US-A- 4 554 724
- US-A- 4 562 635

## Description

### DOMAINE DE L'INVENTION

L'invention concerne un procédé de construction d'un sol incorporant un fil et un accessoire pour la mise en place précise et le maintien du fil dans cette position sous le niveau final du sol, ce procédé aboutissant à un sol dont le revêtement de finition est exempt de joint.
L'invention concerne également l'application de ce procédé à la construction d'un sol équipé d'un fil électrique directeur pour le passage d'un courant électrique générateur d'un champ magnétique, qui permet, au moyen d'automatismes appropriés, de guider un véhicule, par exemple un chariot élévateur dans une zone de stockage.

### ARRIERE PLAN DE L'INVENTION

Afin de faciliter la compréhension de l'invention, sans toutefois vouloir en réduire la portée, les inconvénients posés par les techniques connues de construction d'un sol incorporant un câble vont être développés dans le cadre des sols destinés au trafic des chariots élévateurs filoguidés.

Les chariots élévateurs filoguidés circulent dans des couloirs dont la largeur est minimale, de façon à maximaliser la capacité de stockage des magasins. En conséquence, on cherche à minimiser le jeu latéral entre les roues des chariots et les bords des couloirs.

Ceci est rendu possible par une technique dite de filoguidage. Lorsque le chariot élévateur s'engage dans un couloir, il est pris en charge par un automatisme qui le maintient exactement au centre du couloir.

Le chariot suit au millimètre près un fil électrique directeur qui est encastré dans le sol exactement au centre du couloir. Par ce fil passe un courant électrique qui génère un champ magnétique qui est "lu" par un capteur du chariot, ce qui permet d'orienter les roues directrices du chariot élévateur par un automatisme approprié.

Le sol du couloir sur lequel circule le chariot élévateur est habituellement construit de la manière suivante :

D'abord le sol du couloir, que l'on cherche à faire le plus plat possible, est mis en place. Généralement, le sol est constitué :
- soit d'un béton surfacé, encore appelé "chape refluée" : il s'agit d'un béton dont la surface a été traitée afin d'accroître ses résistances telles que sa résistance à l'abrasion ;
- soit d'un béton sur lequel on vient poser à posteriori une chape à base d'un liant hydraulique ou organique (encore appelé "chape rapportée") ;

Ensuite, une fois le sol coulé, on attend qu'il présente une consistance suffisante pour supporter le poids d'une scie mécanique ; cela peut demander de un à trois jours.

Une rainure à la profondeur voulue, en général de 10 à 15 mm est sciée dans le sol, l'alignement étant assuré soit par un traçage au sol, soit par un guidage au rayon laser.

Le document US-A-4 554 724 donne un exemple d'un tel procédé de construction d'un sol.

Enfin, dans cette rainure, on vient placer le fil. Le joint est ensuite traité par une technique classique quelconque, le plus souvent à l'aide d'un enduit de remplissage.

La technique précitée présente essentiellement trois inconvénients :
- une partie du sol, c'est-à-dire le revêtement d'usure et/ou la partie supérieure de la chape, est découpée exactement sous une des pistes de roulement du chariot. Or, les chariots filoguidés ont en général trois roues, l'une d'elles étant exactement dans l'axe du couloir. La présence du joint constitue donc une faiblesse du sol indésirable.
- le temps de mise en oeuvre est long, car le sciage exige que l'on attende le début de prise du revêtement coulé sur le béton. Dans les grands chantiers, cette opération est également une contrainte, car le sciage doit intervenir avant que le revêtement ne présente toute sa dureté. Or, cette contrainte est en général très élevée car pour tenir compte de la sollicitation des chariots, on emploie évidemment des matériaux capables de développer une dureté suffisamment élevée.
- Lors du sciage, on est amené à refroidir la scie à l'eau, alors que le revêtement est en phase de prise, ce qui provoque un excès d'eau localisé. En outre, l'agression mécanique provoquée par le sciage n'est pas un facteur favorable aux conditions de prise.
Ces deux facteurs combinés peuvent entraîner une certaine dégradation des caractéristiques mécaniques du revêtement de sol exactement là où elles sont le plus nécessaires, c'est-à-dire sous les roues des chariots élévateurs filoguidés.

La présente invention a pour principal objectif de pallier les inconvénients précités.

Plus particulièrement, la présente invention a pour objectif un nouveau procédé de construction d'un sol incorporant un fil qui soit à la fois simple et rapide, et qui garantisse une mise en place précise du fil sous le niveau final du sol sans qu'il soit nécessaire d'y ménager un joint.

A cet effet, l'invention concerne un procédé de construction d'un sol incorporant un fil et comprenant un support en béton (par exemple une dalle neuve ou rénovée), support sur lequel au moins un revêtement de finition à base de liant hydraulique et/ou organique est appliqué, ce procédé étant caractérisé en ce qu'il comprend les étapes suivantes :
a) dans le support en béton, on forme une rainure correspondant à la position future du fil dans le sol, à l'exception de sa profondeur ;
b) on introduit ensuite dans la rainure un accessoire pour la mise en place et le maintien du fil à une profondeur déterminée sous le niveau final du sol après que le revêtement de finition soit coulé, le fil étant associé audit accessoire soit préalablement à l'étape b) ou seulement après cette étape ;
c) on règle, si nécessaire, la hauteur de l'accessoire dans la rainure de telle sorte que la hauteur du fil par rapport à la rainure corresponde à la profondeur à laquelle le fil doit se trouver sous le niveau final du sol après que le revêtement de finition soit coulé ;
d) puis on coule au moins un revêtement de finition adapté à l'usage que l'on doit faire de ce sol, cette étape ayant pour effet de noyer le fil et/ou au moins la partie supérieure dudit accessoire.

Comme on le comprend aisément, le procédé selon l'invention permet d'incorporer un fil dans un sol sans qu'il soit nécessaire d'y former un joint visible, inesthétique et susceptible de gêner la circulation des véhicules quand il conduit à une discontinuité de la surface.

En outre, le temps nécessaire à la construction d'un sol incorporant un fil est grandement diminué puisque, grâce au procédé selon l'invention, la mise en place et le réglage de la position du fil ne sont pas retardés par l'attente du début de la prise du revêtement de finition.

Selon une variante du procédé selon l'invention, on pourra renforcer le revêtement de finition au-dessus du fil, ou même sur toute la largeur du revêtement de finition, à l'aide d'une armature en forme de treillis, ceci afin d'éviter l'apparition d'une fissure en raison de la plus petite section verticale du revêtement de finition au-dessus du fil.

Conformément à l'invention, on prévoit en outre un accessoire d'incorporation d'un fil dans un sol, caractérisé en ce qu'il comprend :
- un moyen de liaison de l'accessoire à la paroi interne de la rainure ménagée sur le support en béton du sol pour la mise en place précise et le maintien du fil à une profondeur déterminée sous le niveau du sol après que le revêtement de finition soit coulé (i.e. réglage de la profondeur) ;
- et un moyen de liaison du fil audit accessoire.

Selon un mode de réalisation préféré de l'invention, l'accessoire utile pour la mise en place et le maintien du fil à une profondeur déterminée sous le niveau final du sol est un profilé en matériau rigide qui comporte :
- une partie supérieure ayant une section sensiblement en forme de "U" ou de "V" et servant à loger le fil. Cette partie supérieure, qui constitue le moyen de liaison du fil à l'accessoire, sera désignée dans la suite de la description par le terme "logement" ;
- et une partie inférieure constituant le moyen pour la mise en place et le maintien du fil à une profondeur déterminée sous le niveau final du sol, qui est solidaire de la partie supérieure (logement), et qui, quand elle n'est pas dans un état comprimé, possède en certains endroits de sa section verticale une largeur légèrement supérieure à la largeur de la rainure, de telle sorte que l'on puisse emboîter sous pression et de façon réversible ladite partie inférieure, au moins partiellement, dans la rainure.

Afin que le fil ne puisse pas sortir facilement du logement prévu dans le profilé, les dimensions internes du logement sont choisies sensiblement voisines de celles de la section du fil, de manière que les parois latérales du logement soient en contact avec le fil, voire qu'elles exercent une légère pression sur le fil.

De préférence encore, la distance séparant les deux bords longitudinaux délimitant le logement sensiblement en forme de "U" ou de "V" ménagé dans le profilé est légèrement inférieure au diamètre du fil. Dans ce cas, l'élasticité du profilé doit être suffisante pour permettre l'écartement des parois latérales du logement lors de l'engagement du fil et leur retour élastique ensuite.

Différentes formes de réalisation de la partie inférieure du profilé pourront permettre le réglage de la position en hauteur du profilé dans la rainure et son maintien dans cette position, malgré les pressions qui pourront être sur lui, en particulier du fait de la coulée du revêtement de finition.

Selon une première forme de réalisation présentant l'avantage d'être simple, la partie inférieure du profilé est constituée d'un profilé plan destiné à être disposé en position verticale et médiane dans la rainure, ce profilé plan étant pourvu sur ses deux faces de bourrelets ou de nervures de telle sorte que le profilé plan présente au niveau des bourrelets et des nervures :
- une largeur légèrement supérieure à celle de la rainure ;
- une élasticité suffisante pour permettre son insertion et le réglage de sa position dans la rainure.

Selon une autre forme de réalisation, la partie inférieure du profilé a sensiblement un profil en "V", l'élasticité du profilé permettant le rapprochement des parois latérales du profil en "V" pour leur engagement dans la rainure et leur retour élastique contre les parois latérales de la rainure ensuite.

D'autres caractéristiques et avantages de l'invention ressortiront de la description qui va suivre, faite en référence aux dessins annexés sur lesquels :
- la Figure 1 est une perspective éclatée illustrant un mode d'incorporation d'un fil dans un sol conforme au procédé selon l'invention ;
- la Figure 2 est une vue en coupe verticale du sol de la figure 1 une fois que le revêtement de finition est coulé.

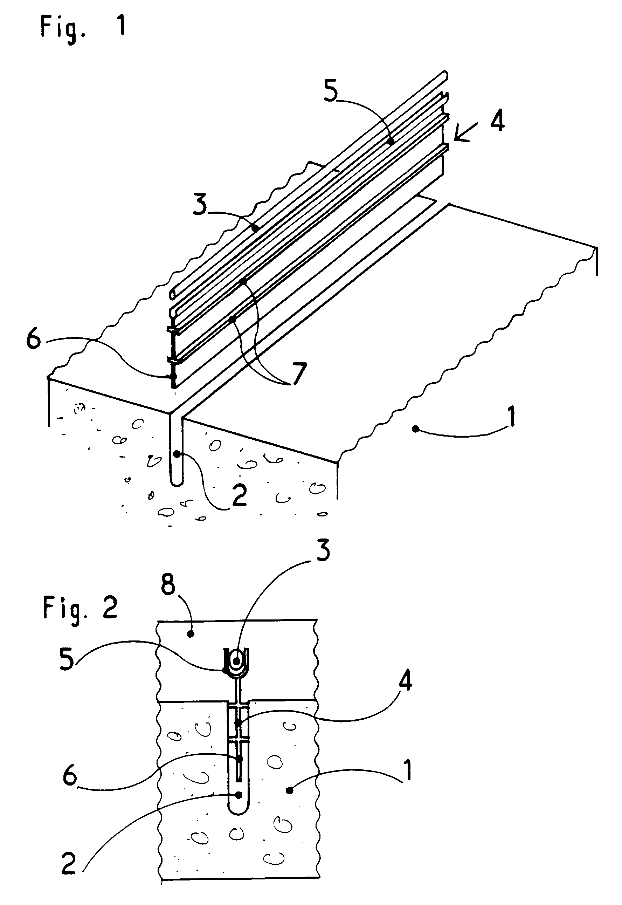

Sur la figure 1, on a représenté une dalle 1 en béton dans laquelle on vient de scier une rainure 2.

Les dimensions de la rainure 2 sont variables et fonction, notamment, des caractéristiques et de la destination du fil 3 à encastrer ainsi que des dimensions du profilé 4. En l'espèce, le fil 3 est un fil électrique directeur devant être disposé dans la piste de roulement d'un véhicule filoguidé et servant à produire un champ magnétique à l'aide d'automatismes et d'appareillages appropriés, bien connus des spécialistes de cette technique de guidage sans rail.

De même, le niveau de la dalle 1 sous le niveau final du sol peut être très variable.

Sur la figure 1, qui concerne la construction d'une piste de roulement d'un véhicule filoguidé, le niveau de la dalle peut être de 20 à 30 mm inférieur au niveau final du sol et la profondeur de la rainure peut varier entre 10 et 50 mm.

Le profilé 4 a été représenté sur la figure 1 avant son introduction dans la rainure 2. Il comprend deux parties, une partie supérieure ou logement 5, et une partie inférieure à emboîter au moins partiellement dans la rainure 2.

Dans cet exemple, la section du logement 5 est sensiblement en forme de "U" et ses dimensions sont telles que le fil électrique 3 une fois emboîté dans le logement 5, y est fermement maintenu grâce à un contact étroit du fil 3 avec les parois internes du logement 5.

La partie inférieure du profilé 4 a ici la forme d'un profilé plan 6 sur lequel sont prévues quatre nervures 7, disposées par paires opposées de part et d'autre du profilé plan 6.

Les dimensions des nervures 7 sont avantageusement choisies de sorte que la largeur du profilé plan 6 soit à leur niveau légèrement supérieure à la largeur de la rainure 2.

Comme indiqué précédemment, le profilé 4 est choisi dans un matériau suffisamment rigide pour permettre le réglage précis de la profondeur du fil électrique 3 sous le niveau du sol.

En outre, pour les besoins du bon fonctionnement du filoguidage, on choisit un matériau ne risquant pas de perturber le champ magnétique, par exemple un plastique comme le polyéthylène ou le polypropylène.

Le montage du fil électrique 3 dans la piste de roulement est relativement simple et rapide quand on se conforme au procédé selon l'invention.
Il consiste en effet à :
- ménager une rainure 2 dans la dalle 1 ;
- de préférence, avant d'introduire le profilé plan 6 dans la rainure 2, encastrer le fil électrique 3 dans le logement 5 du profilé 4 ;
- introduire avec une légère pression le profilé plan 6 au moins partiellement dans la rainure 2, et régler la position du fil électrique 3 à la hauteur voulue par une technique de réglage de niveau quelconque, par exemple au moyen d'un laser. En effet, grâce aux nervures 7 ménagées sur le profilé plan 6 qui sont légèrement comprimées contre les parois latérales de la rainure 2, on règle et on assure facilement le maintien du fil électrique 3 à la hauteur voulue ;
- enfin, couler le revêtement 8 sur la dalle 2 : pour préparer le revêtement de finition et lui donner la planéité voulue, on choisit de préférence une composition, à base de liant hydraulique et/ou organique, ayant une fluidité suffisante. Le choix et le dosage des différents constituants de cette composition auto-lissante peuvent être extrêmement divers et sont bien connus de l'homme du métier compétent. Le revêtement 8 devant servir de piste de roulement de véhicules filoguidés, il conviendra donc de ne retenir que les compositions qui, une fois séchées ou durcies, conduisent à des sols ayant les résistances mécaniques suffisantes.

Sur la figure 2, on a représenté en coupe verticale, la piste de roulement résultant du procédé selon l'invention. Le fil électrique 3 se trouve ici complètement noyé dans la masse du revêtement 8.

Bien entendu, l'invention n'est pas limitée à l'exemple de réalisation ci-dessus décrit et représenté, à partir duquel on pourra prévoir d'autres formes de réalisation, sans pour cela sortir du cadre de l'invention.

Ainsi, on pourra prévoir d'autres formes pour le logement ménagé dans le profilé :
- à titre de premier exemple, le logement pourra être fermé et avoir une forme cylindrique suffisamment étroite pour éviter des modifications de la position du fil. Dans ce cas, le fil électrique devra être glissé dans le logement cylindrique ;
- à titre de second exemple, le logement pourra être une simple pièce horizontale, rapportée sur le moyen servant à régler et à maintenir la position du profilé dans la rainure. Dans ce cas, il conviendra de lier le fil à cette pièce horizontale, par exemple par collage.

## Revendications

1. Procédé de construction d'un sol incorporant un fil (3) et comprenant un support (1) en béton, support (1) sur lequel au moins un revêtement de finition (8) à base de liant hydraulique et/ou organique est appliqué, ce procédé étant caractérisé en ce qu'il comprend les étapes suivantes :
a) dans le support (1) en béton, on forme une rainure (2) correspondant à la position future du fil (3) dans le sol, à l'exception de sa profondeur ;
b) on introduit ensuite dans la rainure (2) un accessoire (4) pour la mise en place et le maintien du fil (3) à une profondeur déterminée sous le niveau final du sol après que le revêtement de finition (8) soit coulé, le fil (3) étant associé audit accessoire (4) soit préalablement à l'étape b) ou seulement après cette étape ;
c) on règle, si nécessaire, la hauteur de l'accessoire (4) dans la rainure (2) de telle sorte que la hauteur du fil (3) par rapport à la rainure (2) corresponde à la profondeur à laquelle le fil (3) doit se trouver sous le niveau final du sol après que le revêtement de finition (8) soit coulé ;
d) puis on coule au moins un revêtement de finition (8) adapté à l'usage que l'on doit faire de ce sol, cette étape ayant pour effet de noyer le fil (3) et/ou au moins la partie supérieure dudit accessoire(4).

2. Procédé selon la revendication 1, caractérisé en ce que l'on renforce le revêtement de finition (8) au-dessus du fil (3), ou sur toute la largeur du revêtement de finition (8), à l'aide d'une armature en forme de treillis.

3. Accessoire d'incorporation d'un fil dans un sol pour la mise en oeuvre du procédé selon la revendication 1 ou 2, caractérisé en ce qu'il comprend :
- un moyen de liaison (6,7) de l'accessoire (4) à la paroi interne de la rainure (2) ménagée sur le support (1) en béton du sol pour la mise en place précise et le maintien du fil (3) à une profondeur déterminée sous le niveau du sol après que le revêtement de finition (8) soit coulé ;
- et un moyen de liaison (5) du fil (3) audit accessoire (4).

4. Accessoire selon la revendication 3, caractérisé en ce que cet accessoire (4) est un profilé en matériau rigide qui comporte :
- une partie supérieure (5) ou logement, ayant une section sensiblement en forme de "U" ou de "V" et servant à loger le fil (3);
- et une partie inférieure (6,7), solidaire de la partie supérieure (5) qui, quand elle n'est pas dans un état comprimé, possède en certains endroits de sa section verticale une largeur légèrement supérieure à la largeur de la rainure (2), de telle sorte que l'on puisse emboîter sous pression et de façon réversible ladite partie inférieure (6,7), au moins partiellement, dans la rainure (2).

5. Accessoire selon la revendication 4, caractérisé en ce que les dimensions internes du logement (5) sont choisies sensiblement voisines de celles de la section du fil (3) de manière que les parois latérales du logement (5) soient en contact avec le fil (3), voire qu'elles exercent une légère pression sur le fil (3).

6. Accessoire selon la revendication 4 ou 5, caractérisé en ce que la distance séparant les deux bords longitudinaux délimitant le logement (5) sensiblement en forme de "U" ou de "V" ménagé dans le profilé est légèrement inférieur au diamètre du fil.

7. Accessoire selon l'une des revendications 4 à 6, caractérisé en ce que la partie inférieure (6,7) du profilé (4) est constituée d'un profilé plan (6) destiné à être disposé en position verticale et médiane dans la rainure, ce profilé plan (6) étant pourvu sur ses deux faces de bourrelets ou de nervures (7) en matériau élastique, la largeur du profil plan (6) au niveau des bourrelets et des nervures (7) étant légèrement supérieure à celle de la rainure (2).

8. Accessoire selon l'une des revendications 4 à 6, caractérisé en ce que la partie inférieure du profilé a sensiblement un profil en "V", l'élasticité du profilé permettant le rapprochement des parois latérales du profil en "V" pour leur engagement dans la rainure et leur retour élastique contre les parois latérales de la rainure ensuite.

## Patentansprüche

1. Verfahren zur Herstellung eines Bodens, in dem ein Draht (3) enthalten ist und der einen Träger (1) aus Beton umfaßt, wobei auf diesen Träger (1) wenigstens ein Endüberzug (8) auf der Basis eines hydraulischen und/oder organischen Bindemittels aufgetragen wird und dieses Verfahren **dadurch gekennzeichnet** ist, daß es die folgenden Schritte umfaßt:
a) man bildet in dem Beton eine Nut bzw. Rille (2), die der künftigen Lage des Drahts (3) in dem Boden entspricht, abgesehen von seiner Tiefe;
b) man führt anschließend ein Zubehör (4) in die Rille (2) ein, um den Draht (3) in einer bestimmten Tiefe unter dem Fertigniveau, das der Boden erreicht, anzubringen und festzuhalten, nachdem der Endüberzog (8) gegossen ist, wobei der Draht (3) mit dem Zubehör (4) entweder vor dem Schritt b) verbunden wird oder erst nach diesem Schritt;
c) man stellt, falls nötig, die Höhe des Zubehörs (4) in der Rille (2) so ein, daß die Höhe des Drahts (3) in bezug auf die Rille (2) der Tiefe entspricht, in der sich der Draht (3) unter dem Fertigniveau des Bodens befinden soll, nachdem der Endüberzug (8) gegossen ist;
d) dann gießt man wenigstens einen Endüberzug (8), angepaßt an die für diesen Boden vorgesehene Benutzung, wobei dieser Schritt die Wirkung hat, den Draht (3) zu versenken bzw. einzubetten und/oder wenigstens den oberen Teil des genannten Zubehörs (4).

2. Verfahren nach Anspruch 1, dadurch gekennzeichnet, daß man den Endüberzug (8) über dem Draht (3) oder über die Gesamtbreite des Endüberzugs (8) verstärkt mit Hilfe eines gitter- bzw. netzförmigen Armierung.

3. Einbettungszubehör eines Drahts in einen Boden zur Anwendung des Verfahrens nach Anspruch 1 oder 2, dadurch gekennzeichnet, daß es umfaßt:
- eine Verbindungseinrichtung (6, 7) des Zubehörs (4) mit der Innenwand der in dem Betonträger (1) vorgesehenen Rille (2) zum genauen Anbringen und Festhalten des Drahts (3) in einer bestimmten Tiefe unterhalb des Bodenniveaus, nachdem der Endüberzug (8) gegossen ist; und
- eine Verbindungseinrichtung (5) des Drahts (3) mit dem genannten Zubehör (4).

4. Zubehör nach Anspruch 3, dadurch gekennzeichnet, daß dieses Zubehör (4) ein Profil aus einem steifen Material ist, umfassend:
- einen Oberteil oder Sitz (5) mit einem im wesentlichen U- oder V-förmigen Querschnitt, um den Draht (3) aufzunehmen;
- einen Unterteil (6,7), fest verbunden bzw. aus einem Stück mit dem Oberteil (5), der in einem nicht-zusammengedrückten Zustand an bestimmten Stellen seines Vertikalsschnitts eine Breite aufweist, die etwas größer ist als die Breite der Rille bzw. Nut (2), so daß man unter Druckausübung und auf reversible Weise besagten Unterteil (6,7) wenigstens teilweise in diese Rille (2) hineinstecken kann.

5. Zubehör nach Anspruch 4, dadurch gekennzeichnet, daß die Innenabmessungen des Sitzes (5) im wesentlichen annähernd denen des Querschnitts des Drahts (3) entsprechen, so daß die Seitenwände des Sitzes (5) Kontakt haben mit dem Draht (3) und vielleicht sogar einen leichten Druck auf den Draht (3) ausüben.

6. Zubehör nach Anspruch 4 oder 5, dadurch gekennzeichnet, daß der Abstand, der die beiden Längsränder trennt, die den im wesentlichen U- oder V-förmigen, in dem Profil ausgesparten Sitz (5) begrenzen, etwas kleiner als der Durchmesser des Drahts ist.

7. Zubehör nach einem der Ansprüche 4 bis 6, dadurch gekennzeichnet, daß der Unterteil (6,7) des Profils (4) gebildet wird durch ein flaches Profil (6), dazu bestimmt, in vertikaler und mittlerer Lage in der Rille angeordnet zu werden, wobei dieses flache Profil (6) auf seinen beiden Seiten mit Wülsten oder Rippen (7) aus elastischem Material versehen ist und die Breite des flachen Profils (6) in Höhe der Wülste und der Rippen (7) etwas größer ist als die der Rille (2).

8. Zubehör nach einem der Ansprüche 4 bis 6, dadurch gekennzeichnet, daß der Unterteil des Profils im wesentlichen die Form eines "V" aufweist und die Elastizität des Profils die Annäherung bzw. das Zusammendrücken der Seitenwände des V-förmigen Profils ermöglicht, um sie in die Rille einführen zu können, wo sie sich dann elastisch zurückbiegen, gegen die Seitenwände der Rille.

## Claims

1. Process for the construction of a floor incorporating a wire (3) and comprising a concrete support (1), with at least one final coating (8) based on a hydraulic and/or organic binding agent applied to said support (1), said process being characterised in that it comprises the following steps:
a) a groove (2) is formed in the concrete support (1) in a position corresponding to the future position of the wire (3) in the floor, but without its depth;
b) a fitting (4) is then inserted into the groove (2) to correctly position and hold the wire (3) at a given depth below the final level of the floor after the final coating (8) has been poured, said wire (3) being connected to said fitting (4) either prior to step b) or only after this step;
c) the height of the fitting (4) in the groove (2) is adjusted, if necessary, so that the height of the wire (3) in relation to the groove (2) corresponds to the depth at which the wire (3) should be located below the final level of the floor after the final coating (8) has been poured;
d) at least one final coating (8) suitable for the intended use of the floor is then poured, the purpose of this step being to conceal the wire (3) and/or at least the upper portion of said fitting (4).

2. Process according to Claim 1, characterised in that the final coating (8) is reinforced, above the wire (3) or over the entire width of the final coating (8), by means of a grating-like fitting.

3. Fitting for incorporating a wire into a floor to carry out the process according to Claim 1 or 2, characterised in that it comprises:
- a means (6, 7) for connecting the fitting (4) to the internal wall of the groove (2), arranged on the concrete support (1) of the floor to correctly position and fix the wire (3) at a given depth below the level of the floor after the final coating (8) has been poured;
- and a means (5) for connecting the wire (3) to said fitting (4).

4. Fitting according to Claim 3, characterised in that this fitting (4) is a shaped part made of rigid material comprising:
- an upper portion (5) or casing with an essentially U-shaped or V-shaped cross-section provided to house the wire (3);
- and a lower portion (6, 7) integral with the upper portion (5), which, when not in a compressed state, has a width in some areas of its vertical section which is slightly larger than the groove (2), so that said lower portion (6, 7) may be embedded at least partially in the groove (2) under pressure and in a reversible manner.

5. Fitting according to Claim 4, characterised in that the selected internal dimensions of the casing (5) substantially correspond to those of the cross-section of the wire (3) so that the side walls of the casing (5) touch the wire (3), i.e. so that they exert a slight pressure on the wire (3).

6. Fitting according to Claim 4 or 5, characterised in that the distance separating the two longitudinal edges defining the essentially U-shaped or V-shaped casing (5) arranged in the shaped part is slightly less than the diameter of the wire.

7. Fitting according to one of Claims 4 to 6, characterised in that the lower portion (6, 7) of the shaped part (4) is formed by a plane shaped part (6) designed to be placed in a vertical and central position in the groove, this plane shaped part (6) being provided on its two faces with beads or ribs (7) made of an elastic material, the width of the plane shaped part (6) at the level of these beads or ribs (7) being slightly greater than that of the groove (2).

8. Fitting according to one of Claims 4 to 6, characterised in that the lower portion of the shaped part has an essentially V-shaped profile, the elasticity of said shaped part enabling the V-shaped side walls to be drawn together for engagement in the groove, and subsequently be elastically returned to rest against the side walls of the groove.
